# EUROPÄISCHE PATENTSCHRIFT

(11) **EP 0 889 226 B1**
(45) Veröffentlichungstag und Bekanntmachung des Hinweises auf die Patenterteilung: **08.08.2001**
(21) Anmeldenummer: 98111384.8
(22) Anmeldetag: 20.06.1998
(51) Int. Cl.: F02M 25/07

(54) **Brennkraftmaschine mit einem Abgasturbolader und Abgasrückführung**
Combustion engine with turbocharger and exhaust gas recirculation
Moteur à combustion avec turbocompresseur et recirculation de gaz d'échappement

(30) Priorität: 03.07.1997 DE 19728353
(43) Veröffentlichungstag der Anmeldung: 07.01.1999
(73) Patentinhaber: DaimlerChrysler AG, 70567 Stuttgart (DE)
(72) Erfinder: Braun, Tillmann, 73663 Berglen (DE); Gärtner, Uwe, 73630 Ramshalden (DE)

(56) Entgegenhaltungen:
- EP-A- 0 620 365
- WO-A-98/55759
- US-A- 5 406 796

## Beschreibung

Die Erfindung betrifft eine Brennkraftmaschine mit einem Abgasturbolader, der eine im Abgasleitungssystem angeordnete Abgasturbine und einen von der Abgasturbine angetriebenen in einer Frischluftzuführung angeordneten Ladeluftverdichter aufweist.

Zur Rückführung von Abgasen aufgeladener Verbrennungsmotoren als wirksame Maßnahme zur Begrenzung der Stickoxydemissionen werden heute aus Verschleiß- und Verschmutzungsgründen überwiegend Rückführsysteme verwendet, die das Abgas zwischen dem Austritt aus der Brennkraftmaschine und der Abgasturbine entnehmen, anschließend das Abgas gegebenenfalls durch einen separaten Wärmetauscher leiten und dann der Frischluft im Bereich der Ladeluftleitung, zumeist nach einem Ladeluftkühler, wieder zuführen. Aufgrund der Charakteristik des Abgasturboladers endet der nutzbare Bereich für eine Abgasrückführung, sobald der Ladedruck nach dem Ladeluftverdichter den Abgasdruck vor der Abgasturbine überschreitet und damit kein Druckgefälle mehr für das Abgasrückführungssystem vorhanden ist.

Aus der WO-A-98/55759, die gemäß Artikel 54(3) EPÜ auf die vorliegende Patentanmeldung anzuwenden ist, ist eine Brennkraftmaschine mit einem Abgasturbolader bekannt, bei der ein 3-Wege-Mischer vorgesehen ist und bei der in der Abgasaufladeleitung eine Einrichtung zum Anheben des Drucks des zurückgeführten Abgases angeordnet ist.

Aus der DE 42 31 218 C1 ist eine Abgasrückführung bekannt, wobei das Abgas in der vorstehend genannten Weise vor der Abgasturbine entnommen wird, in einem separaten Abgasverdichter auf einen höheren Druck gebracht wird und anschließend der Frischluft wieder zugemischt wird. Die Menge des rückgeführten Abgases wird über ein 3/2-Wege-Ventil gesteuert. Der Antrieb des Zusatzverdichters für das Abgas erfolgt über die Abgasturbine des Abgasturboladers. In einer anderen Ausgestaltung erfolgt der Antrieb über einen in Reihe geschalteten zweiten Abgasturbolader.

Ein wesentlicher Nachteil dieses Abgasrückführsystemes ist eine erhebliche Verschlechterung des Ladungswechsels des Motores, da vor der Abgasturbine des Abgasturboladers Abgas entnommen wird, womit die Turbinenarbeit mit steigender Rückführung immer weiter absinkt und entsprechend der Ladedruck abfällt. Dies führt zu hohen Partikelemissionen des Motores bzw. starker Beschränkung des Abgasrückführungsbereiches, da im Abgasrückführungsbetrieb, insbesondere in der Nähe der Vollast, das Verbrennungsluftverhältnis im Abgasrückführungsbetrieb auch bei einer ungestörten Abgasturbine ohnehin sehr kritisch ist. Im Hinblick auf das Instationärverhalten der Brennkraftmaschine ist diese Form der Abgasrückführung ebenfalls kritisch. Bei der bei Brennkraftmaschinen üblichen Stoßaufladung schaden darüber hinaus die sehr großen Zusatzvolumina der Abgasturbine des Abgasturboladers. Zusätzlich erhöht das Verdichterrad für die Abgasverdichtung das Massenträgheitsmoment des Abgasturboladers und verschlechtert damit zusätzlich auch das Beschleunigungsverhalten.

Im stationären Abgasrückführungsbetrieb sind darüber hinaus Verbrauchsverschlechterungen zu erwarten, da der Ladeluftverdichter für die Frischluft außerhalb seines Auslegungspunktes mit schlechtem Wirkungsgrad arbeitet, weil nur noch die um die Abgasrate verminderte Frischluftmenge zu verdichten ist, gleichzeitig aber der Ladeluftverdichter so ausgelegt werden muß, daß er bei abgeschalteter Abgasrückführung den kompletten Luftbedarf in der Brennkraftmaschine liefert.

Bei der Ausführung der Abgasrückführung mit einem zweiten in Reihe geschalteten Abgasturbolader ist nachteilig, daß dabei die Turbine stets rotiert, auch wenn gar kein Abgas benötigt wird, womit in deutlichem Maße der Ladungswechsel der Brennkraftmaschine aufgrund der höheren Ausschiebearbeit der Kolben behindert wird.

Bei beiden Ausführungsformen ist es aus thermodynamischer Sicht unwirtschaftlich, der Turbine zunächst das Arbeitsmedium zu entziehen, dieses in jedem Fall zu verdichten und dann überflüssiges Abgas ungenutzt abzusteuern.

Aus der EP 0 620 365 A1 ist eine Brennkraftmaschine mit Abgasrückführung bekannt, wobei zu einem konventionellen Abgasturbolader ein zweiter Abgasturbolader ausschließlich zur Abgasförderung parallel geschaltet wird. Zwar wird dabei das rückzuführende Abgas erst nach den Turbinen abgezweigt, nachteilig ist jedoch dabei, daß der Abgasteilstrom zum Antrieb des Abgasturboladers der Hauptturbine verloren geht. Das Instationärverhalten dieser Ausführung ist dabei noch unbefriedigender, da beim Beschleunigungsvorgang, der zur Vermeidung unzulässiger Partikelemissionen ein Abschalten der Abgasrückführung erforderlich macht, zunächst einmal die gesamte zweite Abgasturboladergruppe abgekoppelt werden muß. Erst danach erhöht sich der Abgasdurchsatz durch die Hauptturbine und die Drehzahl des Abgasturboladers steigt. Der Abgasteilstrom zum Antrieb des Abgasrückführungsladers geht damit der Hauptturbine verloren. Für Fahrzeugantriebe und Stoßaufladung, bei der die Druckspitzen im Abgassystem benutzt werden, ist diese Anordnung aufgrund der großen Schadvolumina im Abgassystem eigentlich ungeeignet. Ebenso wie bei dem vorstehend beschriebenen Stand der Technik ist von Nachteil, daß Verdichter und Turbine des Hauptabgasturboladers einen zu breiten Betriebsbereich abdecken müssen und deshalb nicht wirkungsgradoptimal abgestimmt werden können. Darüber hinaus ist von Nachteil, daß Bauaufwand, Platzbedarf und Anlagekosten bei diesem System relativ hoch sind.

In der DE 40 07 516 A1 ist ein Dieselmotor beschrieben, wobei Abgas und Luft gemeinsam in nur einem Verdichter verdichtet werden. Nachteilig dabei ist jedoch, daß ein Partikelfilter zur Verhinderung von Ablagerungen und Verschleiß an dem Verdichter und einem nachgeschalteten Ladeluftkühler erforderlich sind. Die Kosten und der Bauaufwand für einen Partikelfilter und dessen Regenerationseinrichtungen sind jedoch ein deutlicher Nachteil.

Der vorliegenden Erfindung liegt daher die Aufgabe zugrunde eine Brennkraftmaschine der eingangs erwähnten Art zu schaffen, wobei die Wirkung der Abgasrückführung auf den gesamten motorischen Betriebsbereich ausgedehnt werden kann ohne daß der Ladungswechsel des Motors nachteilig beeinflußt und das Instationärverhalten verschlechtert wird und wobei aus Kostengründen möglichst wenig Bauteile für die Abgasrückführung notwendig sein sollen.

Erfindungsgemäß wird diese Aufgabe durch die in Anspruch 1 genannten Merkmale gelöst.

Im Vergleich zum Stand der Technik besteht eines der wesentlichen Vorteile der Erfindung darin, daß Ladungswechsel der Brennkraftmaschine in allen Betriebszuständen ungestört bleiben. Der Brennkraftmaschine wird erfindungsgemäß stets die gleiche Ladungsmasse zugeführt, lediglich deren Zusammensetzung ändert sich. Die Regelung der Zusammensetzung erfolgt erfindungsgemäß durch den 3-Wege-Mischer, der eine ausschließliche Rückführung von Abgas in die Ladeluftleitung, einen Mischbetrieb mit von der Frischluftzuführung abgezweigter Frischluft oder auch einen Zweigbetrieb mit ausschließlich durch die Abgasaufladeleitung geführter Frischluft ermöglicht.

Von Vorteil ist weiterhin auch, daß die vorteilhaften Wirkungen einer Stoßaufladung voll erhalten bleiben. Bei Beschleunigungsvorgängen aus dem Abgasrückführungsbetrieb heraus steht sofort die volle Abgasturboladerdrehzahl zur Verfügung. Die Abgasturbine, der Ladeluftverdichter und auch der Sekundärverdichter können wie bei einer baugleichen Brennkraftmaschine ohne Abgasrückführsystem stets bei optimalen Wirkungsgraden betrieben werden.

Ebenso bleiben die Vorteile der Abgasrückführung im Konflikt "Stickoxyd-/Kraftstoffverbrauch" im Gegensatz zu bekannten Verfahren voll erhalten, da die Rückführung des Abgases nicht durch eine Verschlechterung des Ladungswechsels erzwungen wird.

Weiterhin sind deutliche Vorteile in der Partikelemission zu verzeichnen, da die Verringerung des Verbrennungsluftverhältnisses nur durch den zugemischten Abgasanteil zustande kommt und nicht durch eine Absenkung der Arbeit der Abgasturbine. Im Abgasrückführungsbetrieb arbeitet somit das erfindungsgemäße Verfahren auf deutlich höherem Luftniveau als bekannte Systeme.

Von Vorteil ist weiterhin, daß z.B. im Vergleich zu der DE 42 31 218 der Sekundärverdichter von der Abgastemperatur weit weniger belastet wird, da das rückzuführende Abgas nach der Abgasturbine deutlich kälter ist als bei einer Abgasentnahme vor der Abgasturbine.

Im Vergleich zu dem weiteren Stand der Technik werden bei der erfindungsgemäßen Lösung weniger Bauteile benötigt, da z.B. eine zweite Turbine und eines der Ventile wegfallen kann. Darüber hinaus ist die erfindungsgemäße Lösung sowohl für Fahrzeug- als auch für Stationärmotoren in gleicher Weise geeignet. Im allgemeinen kann auch auf den Einbau von teuren Partikelfiltern verzichtet werden.

Vorteilhafte weiterbildungen und Ausgestaltungen der Erfindung ergeben sich aus den Unteransprüchen und aus dem nachfolgend anhand der Zeichnung prizipmäßig beschriebenen Ausführungsbeispiel.

Es zeigt:
- Fig. 1: eine schematische Darstellung einer Brennkraftmaschine mit der erfindungsgemäßen Abgasrückführung, und
- Fig. 2: eine schematische Darstellung einer Brennkraftmaschine mit einer Abgasrückführung in einer zweiten Ausführungsform.

Da Abgasrückführungssysteme grundsätzlich bezüglich Aufbau und Wirkungsweise allgemein bekannt sind, wird nachfolgend nur auf die für die Erfindung wesentlichen Teile näher eingegangen.

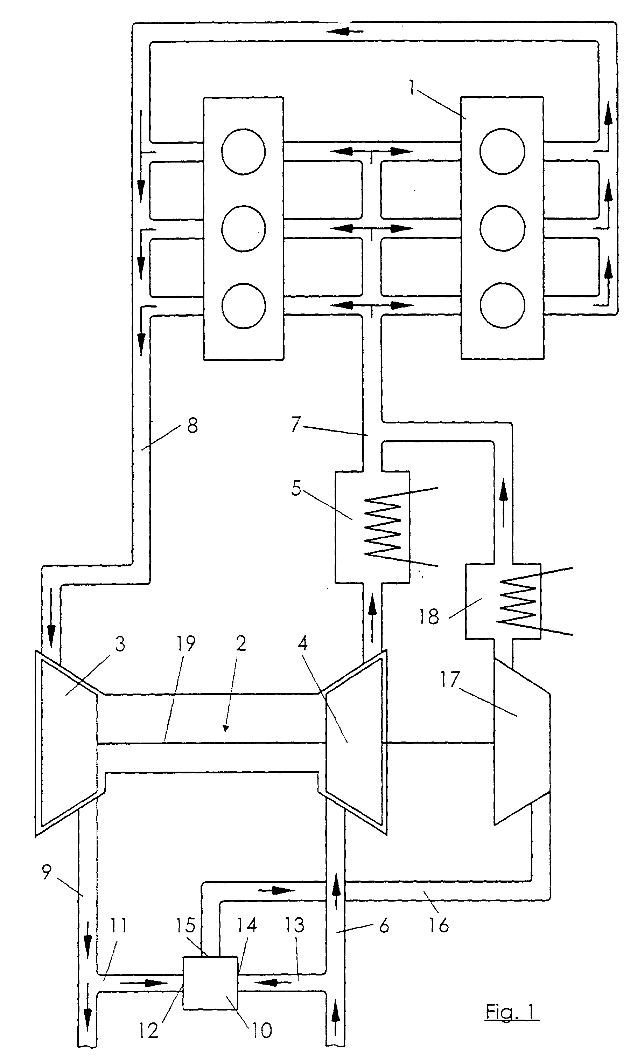

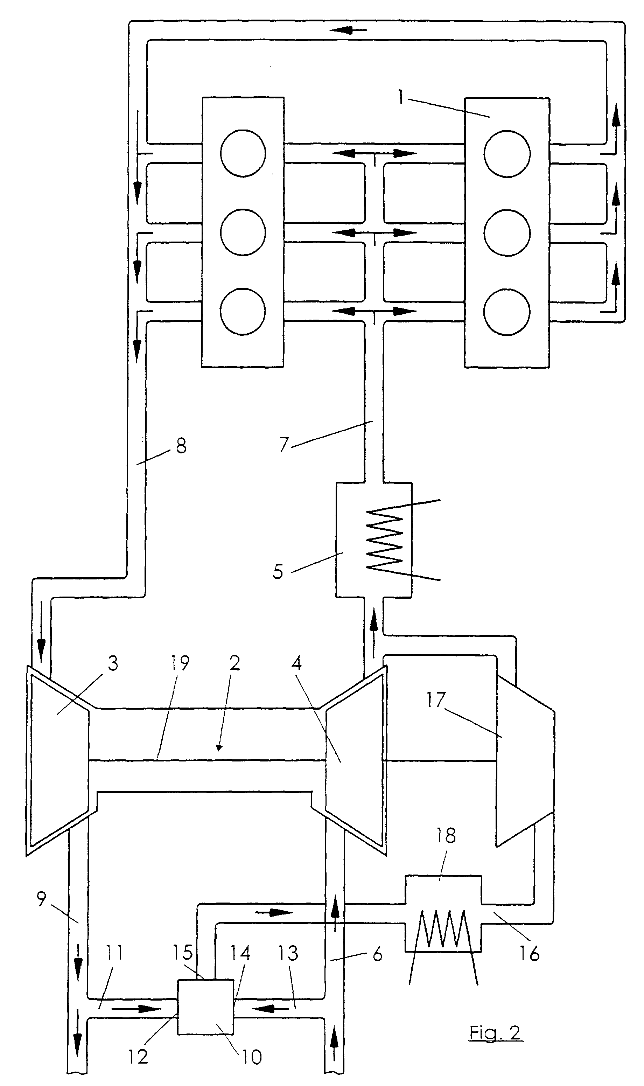

Bei den in den Figuren 1 und 2 dargestellten Ausführungsbeispielen ist als Brennkraftmaschine ein Dieselmotor 1 mit sechs Zylindern in V-Anordnung dargestellt, der mit einem Abgasturbolader 2, der eine Abgasturbine 3 und einen Ladeluftverdichter 4 aufweist, und mit einem Ladeluftkühler 5 versehen ist. Der Ladeluftverdichter 4 befindet sich in einer Frischluftzuführung 6, der Ladeluftkühler 5 in einer Ladeluftleitung 7, in der von dem Ladeluftverdichter 4 aufgeladene Frischluft zu den Zylindern des Dieselmotores 1 strömt.

Die Abgase des Dieselmotores 1 verlassen die Zylinder über Abgaskrümmer und eine Abgasleitung 8, die eingangsseitig mit der Abgasturbine 3 verbunden ist. Von der Ausgangsseite der Abgasturbine 3 aus führt eine Auspuffleitung 9 zu einer nicht dargestellten Auspuffanlage.

Ein 3-Wege-Mischer 10 ist in einer Abgasrückführleitung 11 angeordnet und mit der Abgasrückführleitung 11 über einen ersten Eingang 12 verbunden. Eine Zweigleitung 13 zweigt von der Frischluftzuführung 6 ab und ist mit einem zweiten Eingang 14 des 3-Wege-Mischers 10 verbunden. Von einem Ausgang 15 aus führt eine Abgasaufladeleitung 16 zu einer Einrichtung zur Druckanhebung, die als Sekundärverdichter 17 ausgebildet ist. Ausgangsseitig führt die Abgasaufladeleitung 16 nach Durchgang durch einen Abgaswärmeübertrager 18 nach dem Ausführungsbeispiel der Fig. 1 zu der Ladeluftleitung 7, wo sie zwischen dem Ladeluftkühler 5 und den Zylindern des Dieselmotores 1 in diese einmündet.

Der Ladeluftverdichter und der im Abgassystem angeordnete Sekundärverdichter 17 werden gemeinsam durch eine Antriebswelle 19 von der Abgasturbine 3 aus angetrieben.

Mit Hilfe des 3-Wege-Mischers 10 ist es möglich, daß dem Sekundärverdichter 17 entweder ausschließlich Abgas aus der Auspuffleitung 11, ausschließlich Frischluft über die Zweigleitung 13 oder auch eine Mischung aus beidem zugeführt werden kann.

Folgende Betriebsarten sind damit möglich:
1. Betrieb des Dieselmotores 1 mit maximaler Abgasrückführungsrate:
   Der 3-Wege-Mischer schließt die Zweigleitung 13 und damit die Verbindung zu der Frischluftzuführung 6 vollständig, so daß der Sekundärverdichter 17 ausschließlich Abgas aus der Auspuffleitung 9 ansaugt. Die gewünschte Abgasrückführungsrate bestimmt die Baugröße bzw. das Fördervolumen der beiden Verdichter 4 und 17. Wird z.B. eine maximale Abgasrückführungsrate von etwa 25% angestrebt, so sind beide Verdichter 4 und 17 etwa im Verhältnis 3:1 zu wählen.
2. Betrieb des Dieselmotores 1 ohne Abgasrückführung:
   Der 3-Wege-Mischer 10 schließt gegen die Auspuffleitung 9 vollständig, so daß beide Verdichter 4 und 17 ausschließlich Frischluft aus der Frischluftzuführung 6 verdichten. Die geförderte Frischluftmenge entspricht dabei der eines baugleichen Motores ohne Abgasrückführsystem.
3. Betrieb des Dieselmotores 1 mit Abgasrückführungsraten zwischen 0 und Maximum:
   Der 3-Wege-Mischer 10 mischt die aus der Auspuffleitung 9 einströmende Abgasmenge mit der aus der Zweigleitung 13 einströmenden Frischluft in Höhe der gewünschten Abgasrückführungsrate. Soll z.B. eine Abgasrückführungsrate von 10% eingestellt werden, sieht bei einer Verdichterauslegung wie im Fall 1 die Bilanz wie folgt aus:
   75% des Arbeitsgases werden als Frischluft von dem Ladeluftverdichter 7 geliefert
   25% des Arbeitsgases werden vom Sekundärverdichter 17 als Abgas/Luftgemisch geliefert, wovon 15% Frischluftanteil ist.

Die Position des 3-Wege-Mischers 10 ist abhängig vom momentanen Betriebszustand des Dieselmotores 1. Im einfachsten Fall kann eine einfache Kennfeldsteuerung zur Betätigung eingesetzt werden. Für höhere Anforderungen wäre z.B. eine Regelung auf Basis einer Luftmassenbestimmung in der Frischluftzuführung 6 oder eine gleichzeitige Messung der Kohlendioxydkonzentrationen in der Ladeluftleitung 7 und der Auspuffleitung 9 denkbar, deren Verhältnis der prozentualen Rückführrate entspricht.

In der Regel werden sich beide Verdichter 4 und 17 in der Art der verwendeten Werkstoffe unterscheiden, wobei die Werkstoffe beim Sekundärverdichter 17 so gewählt werden müssen, daß eine Dauerhaltbarkeit des Verdichters im Hinblick auf Partikelablagerungen und Temperaturbelastung auch bei Zufuhr von heißen Abgasen erhalten bleibt.

Selbstverständlich kann der Sekundärverdichter 17 auch einen eigenen Antrieb aufweisen, wie z.B. einen elektromotorischen Antrieb. Ebenso kann anstelle eines Strömungsverdichters auch jede andere Verdichterbauart, z.B. ein Verdrängerlader, wie z.B. ein Rootsgebläse eingesetzt werden. In diesem Falle kann die Abgasturbine 3 kleiner ausgeführt werden und überschüssige Abgasmasse entsprechend der geringeren Verdichterarbeit über einen Bypass (Wastegate) abgesteuert werden.

Nach dem Ausführungsbeispiel der Fig. 1 mündet die Abgasaufladeleitung 16 nach dem Abgaswärmeübertrager 18 hinter dem Ladeluftkühler 5 in die Ladeluftleitung 7.

Wenn der Ladeluftkühler 5 gegen Verschleiß und Ablagerung hinreichend sicher ausgeführt wird, ist eine in der Fig. 2 dargestellte Abwandlung der Abgasrückführung denkbar. In diesem Falle wird die aus dem Sekundärverdichter 17 austretende verdichtete Abgasströmung in die Ladeluftleitung 7 vor dem Ladeluftkühler 5 eingeleitet, der dann eine Mischung aus Abgas und Frischluft auf die gewünschte Temperatur für die gesamte Zylinderladung abkühlt. Da das in der Fig. 2 dargestellte Ausführungsbeispiel im übrigen von gleichem Aufbau ist, wurden hierfür auch die gleichen Bezugszeichen verwendet. Weiterhin wurde aus diesem Grunde auch auf die Abgasführung nicht näher eingegangen. Zu erwähnen ist lediglich noch, daß in diesem Falle trotzdem noch ein Abgaswärmeübertrager 18 vorgesehen sein kann, der vor dem Sekundärverdichter 17 angeordnet ist. Grundsätzlich könnte der Abgaswärmeübertrager 18 aufgrund der gemeinsamen Kühlung in dem Ladeluftkühler 5 zwar entfallen, aber durch den Abgaswärmeübertrager 18 kann die Verschmutzung des Sekundärverdichters 17 vermindert werden und dieser erhält auch kältere Abgase, wodurch ebenfalls die Gefahr von Schädigungen des Sekundärverdichters 17 reduziert wird. Gleiches gilt auch für den Ladeluftkühler 5, durch den das auf diese Weise vorgereinigte und abgekühlte Abgas strömt.

Da beide Verdichter 4 und 17 gemeinsam betrieben werden und im Bedarfsfalle auch ausschließlich Frischluft über den Sekundärverdichter 17 verdichtet werden kann, kann der Ladeluftverdichter 4 entsprechend kleiner bezüglich seiner Leistung ausgebildet werden. Die Auslegungspunkte sind dabei auf den maximalen Gasdurchsatz bei Nennleistung abzustellen. Nach diesem Punkt bestimmt sich die Gesamtgröße. Entsprechend der gewünschten Abgasrückführungsrate erfolgt dann die Aufteilung auf die beiden Verdichter bzw. die Auslegung auf die jeweilige Größe.

## Patentansprüche

1. Brennkraftmaschine mit einem Abgasturbolader (2), der eine im Abgasleitungssystem angeordnete Abgasturbine (3) und einen von der Abgasturbine (3) angetriebenen in einer Frischluftzuführung (6) angeordneten Ladeluftverdichter (4) aufweist, und mit einer Abgasrückführleitung (11), die aus dem Abgasleitungssystem in Abgasströmungsrichtung hinter der Abgasturbine (3) abzweigt und in die Frischluftzuführung in Strömungsrichtung nach dem Ladeluftverdichter (4) in eine Ladeluftleitung (7) der Frischluftzuführung (6) einmündet, wobei in der Abgasrückführleitung (11) ein 3-Wege-Mischer (10) angeordnet ist, mit einem ersten Eingang (12) für die Abgasrückführleitung (11), mit einem zweiten Eingang (14), der mit der Frischluftzuführung (6) verbunden ist, und mit einem Ausgang (15) von dem aus eine Abgasaufladeleitung (16) zu der Ladeluftleitung (7) zurückführt, wobei in der Abgasaufladeleitung (16) eine Einrichtung (17) vorgesehen ist, über welche eine Druckanhebung des zurückgeführten Abgases auf das ladeluftseitige Druckniveau hinter dem Ladeluftverdichter (4) erfolgt, wobei die Einrichtung zur Druckanhebung einen Sekundärverdichter (17) aufweist, und wobei der Sekundärverdichter (17) zusammen mit dem in der Frischluftzuführung (6) angeordneten Ladeluftverdichter (4) von der Abgasturbine (3) antreibbar ist.

2. Brennkraftmaschine nach Anspruch 1,
**dadurch gekennzeichnet**, daß
die Fördervolumenströme des in der Frischluftzuführung (6) angeordneten Ladeluftverdichters (4) und des in der Abgasaufladeleitung (16) der Abgasrückführleitung (11) angeordneten Sekundärverdichters (17) in einem Verhältnis stehen, das durch die maximale Rückführrate und den Luftbedarf der Brennkraftmaschine im abgasrückführungsfreien Betrieb bestimmt ist.

3. Brennkraftmaschine nach Anspruch 1 oder 2,
**dadurch gekennzeichnet**, daß der 3-Wege-Mischer (10) in Abhängigkeit von den Kohlendioxyd-Konzentrationen in der Ladeluftleitung (7) und der Abgasrückführleitung (11) regelbar ist.

4. Brennkraftmaschine nach Anspruch 1, 2 oder 3,
**dadurch gekennzeichnet**, daß in der Ladeluftleitung (7) ein Ladeluftkühler (5) angeordnet ist, und daß in der Abgasaufladeleitung (16) ein Wärmetauscher (18) angeordnet ist und die Abgasaufladeleitung (16) in Strömungsrichtung hinter dem Ladeluftkühler (5) in die Ladeluftleitung (7) einmündet.

5. Brennkraftmaschine nach Anspruch 1, 2 oder 3,
**dadurch gekennzeichnet**, daß
in der Ladeluftleitung (7) ein Ladeluftkühler (5) angeordnet ist, und daß die Abgasaufladeleitung (16) in Strömungsrichtung vor dem Ladeluftkühler (5) in die Ladeluftleitung (7) einmündet.

6. Brennkraftmaschine nach Anspruch 5,
**dadurch gekennzeichnet**, daß
zwischen dem 3-Wege-Mischer (10) und der Einrichtung (17) zur Druckanhebung ein Wärmetauscher (18) angeordnet ist.

## Claims

1. Internal combustion engine with an exhaust turbocharger (2), having an exhaust turbine (3) disposed in the exhaust system and a charge air compressor (4) driven by the exhaust turbine (3) disposed in a fresh air delivery (6), and having an exhaust gas recirculation line (11) branching off from the exhaust system downstream of the exhaust turbine (3) in the flow direction of the exhaust gas and opening into a charge air line (7) of the fresh air delivery after the charge air compressor (4) in the flow direction, a 3-way mixer (10) being disposed in the exhaust gas recirculation line (11) having a first inlet (12) for the exhaust gas recirculation line (11), a second inlet (14) communicating with the fresh air delivery (6) and an outlet (15) from which an exhaust gas charge line (16) leads back to the charge air line (7), a device (17) being provided in the exhaust gas charge line (16) by means of which the pressure of the recirculated exhaust gas is increased to the charge air-side pressure level after the charge air compressor (4), the pressure-increasing device having a secondary compressor (17) and the secondary compressor (17) together with the charge air compressor (4) disposed in the fresh air delivery (6) being driveable by the exhaust gas turbine (3).

2. Internal combustion engine as claimed in claim 1,
**characterised in that**
the ratio of the conveyed flow volumes of the charge air compressor (4) disposed in the fresh air delivery (6) and of the secondary compressor (17) disposed in the exhaust gas charge line (16) of the exhaust gas recirculation line (11) is determined by the maximum recirculation rate and the air requirement of the internal combustion engine during operation without exhaust gas recirculation.

3. Internal combustion engine as claimed in claim 1 or 2,
**characterised in that**
the 3-way mixer (10) is controllable depending on the carbon dioxide concentrations in the charge air line (7) and the exhaust gas recirculation line (11).

4. Internal combustion engine as claimed in claim 1, 2 or 3,
**characterised in that**
a charge air cooler (5) is disposed in the charge air line (7) and a heat exchanger (18) is disposed in the exhaust gas charge line (16) and the exhaust gas charge line (16) opens into the charge air line (7) downstream of the charge air cooler (5) in the flow direction.

5. Internal combustion engine as claimed in claim 1, 2 or 3,
**characterised in that**
a charge air cooler (5) is disposed in the charge air line (7) and the exhaust gas charge line (16) opens into the charge air line (7) upstream of the charge air cooler (5) in the flow direction.

6. Internal combustion engine as claimed in claim 5,
**characterised in that**
a heat exchanger (18) is disposed between the 3-way mixer (10) and the device (17) for increasing the pressure.

## Revendications

1. Moteur à combustion interne avec un turbocompresseur entraîné par les gaz d'échappement (2), présentant une turbine à gaz d'échappement (3), disposée dans le système de conduite de gaz d'échappement, et un compresseur d'air de suralimentation (4), entraîné par la turbine à gaz d'échappement (3), disposé dans une amenée d'air neuf (6) et avec une conduite de recirculation des gaz d'échappement (11), partant du système de conduite de gaz d'échappement, en aval de la turbine à gaz d'échappement (3) en observant dans la direction de l'écoulement des gaz d'échappement, et débouchant dans l'amenée d'air neuf, en aval du compresseur d'air de suralimentation (4), en observant dans la direction de l'écoulement, dans une conduite d'air de suralimenation (7) de l'amenée d'air neuf (6), un mélangeur à 3 voies (10) étant disposé dans la conduite de recirculation de gaz d'échappement (11), avec une première entrée (12) pour la conduite de recirculation des gaz d'échappement (11), avec une deuxième entrée (14), reliée à l'amenée d'air neuf (6), et avec une sortie (15), d'où part une conduite de suralimentation en gaz d'échappement (16) allant à la conduite d'air de suralimentation (7), dans la conduite de suralimenation en gaz d'échappement (16) étant prévu un dispositif (17), par l'intermédiaire duquel est effectuée une augmentation de pression des gaz. d'échappement recyclés, au niveau de pression du côté air de suralimentation, tel qu'en aval du compresseur d'air de suralimentation (4), le dispositif d'augmentation de pression présentant un compresseur secondaire (17) et le compresseur secondaire (17), conjointement avec le compresseur d'air de suralimentation (4). disposé dans l'amenée d'air neuf (6), étant susceptible d'être entraînés par la turbine à gaz d'échappement (3).

2. Moteur à combustion interne selon la revendication 1, caractérisé en ce que les débits-volumes véhiculés, du compresseur d'air de suralimentation (4), disposé dans l'amenée d'air neuf (6), et du compresseur secondaire (17), disposé dans la conduite de suralimentation en gaz d'échappement (16) de la conduite de recyclage des gaz d'échappement (11), sont dans un rapport déterminé par le taux de recirculation maximal et le besoin en air du moteur à combustion interne, en fonctionnement sans recirculation des gaz d'échappement.

3. Moteur à combustion interne selon la revendication 1 ou 2, caractérisé en ce que le mélangeur à trois voies (10) est réglable en fonction des concentrations en dioxyde de carbone, dans la conduite d'air de suralimentation (7) et de la conduite de recyclage des gaz d'échappement (11).

4. Moteur à combustion interne selon la revendication 1, 2 ou 3, caractérisé en ce que dans la conduite d'air de suralimentation (7) est disposé un refroidisseur d'air de suralimentation (5), et en ce que dans la conduite de suralimentation en gaz d'échappement (16) est disposé un échangeur de chaleur (18) et la conduite de suralimentation en gaz d'échappement (16) débouchant dans la conduite d'air de suralimentation (7) en aval du refroidisseur d'air de suralimentation (5), en observant dans la direction de l'écoulement.

5. Moteur à combustion interne selon la revendication 1, 2 ou 3, caractérisé en ce qu'un refroidisseur d'air de suralimenation (5) est disposé dans la conduite d'air de suralimentation (7), et en ce que la conduite de suralimentation en gaz d'échappement (16). débouche dans conduite d'air de suralimenation (7), en un point situé en amont du refroidisseur d'air de suralimentation (5), en observant dans la direction de l'écoulement.

6. Moteur à combustion interne selon la revendication 1, 2 ou 3, caractérisé en qu'un échangeur de chaleur (18) est disposé entre le mélangeur à trois voies (10) et le dispositif (17) d'augmentation de pression.
